# EUROPÄISCHE PATENTSCHRIFT

(11) **EP 0 334 986 B1**
(45) Veröffentlichungstag und Bekanntmachung des Hinweises auf die Patenterteilung: **26.05.1993**
(21) Anmeldenummer: 88105310.2
(22) Anmeldetag: 31.03.1988
(51) Int. Cl.: B60R 1/06

(54) **Abklappbarer Aussenspiegel für ein Fahrzeug mit mechanisch verstellbarem Spiegel**
Foldable internal rear view mirror for a vehicle with a mechanically adjustable mirror
Rétroviseur extérieur rabattable de véhicule comportant un miroir réglable mécaniquement

(43) Veröffentlichungstag der Anmeldung: 04.10.1989
(73) Patentinhaber: HOHE KG, D-97903 Collenberg (DE)
(72) Erfinder: Polzer, Herwig, D-8760 Miltenberg (DE); Seitz, Edwin, D-6985 Neuenbuch (DE)
(74) Vertreter: Zinngrebe, Horst, Dr.rer.nat.

(56) Entgegenhaltungen:
- DE-A- 3 638 876
- DE-U- 8 701 766
- FR-A- 2 163 109
- FR-A- 2 258 287
- PATENT ABSTRACTS OF JAPAN, Band 12, Nr. 57 (M-670)[2904], 20. Februar 1988; & JP-A-62 203 843 (MURAKAMI KAIMEDOU K.K.) 08.09.1987

## Beschreibung

Die Erfindung betrifft einen abklappbaren Außenspiegel für ein Fahrzeug mit einem Spiegel, der durch Betätigen eines Handgriffs um zwei zueinander senkrechte Achsen relativ zum Spiegelgehäuse verstellbar ist.

Der aus der Gebrauchsmusterschrift 78 06 907 bekannte Außenspiegel für ein Kraftfahrzeug enthält einen um zwei zueinander senkrechte und in der Spiegelebene liegende Achsen verstellbaren Spiegel. Dazu ist eine Wippe vorgesehen, von der zwei gegenüberliegende Zapfen in je einem mit dem Boden des Spiegelgehäuses verbundenen Bock und zwei dazu querliegende Zapfen an einem mit dem Spiegel verbundenen Träger gelagert sind. Um eine allseitige Verstellbarkeit des Spiegels um die genannten Achsen zu gewährleisten, sind am Träger die Enden dreier Bowdenzüge eingehängt, die sich durch den Fuß des Außenspiegels, an welchem das Spiegelgehäuse schwenkbar gelagert ist, erstrecken. Die handgriffseitigen Enden der ummantelten Bowdenzüge sind mit einer Übersetzungsvorrichtung verbunden, welche die von einer Bedienungsperson veranlaßten Bewegungen des Handgriffs in Druck- und/oder Zugbewegungen der Bowdenzüge überträgt.

Diese vom Inneren eines Fahrzeugs aus betätigbare Verstellvorrichtung für den Spiegel eines Fahrzeug-Außenspiegels ist relativ aufwendig und schwergängig, weil die Bowdenzüge durch den Fuß und das Schwenkgelenk zwischen Gehäuse und Fuß nicht hinreichend krümmungsarm geführt werden können.

Das Dokument JP-A-62 203 843 zeigt einen Außenspiegel für ein Fahrzeug, dessen Spiegel über ein Gestänge um zwei zueinander senkrechte Achsen verstellbar ist. Das Gestänge umfaßt einen ersten allseits beweglichen Hebel, an dessen einem Arm ein Bedienungsorgan befestigt ist, und dessen anderer Arm mit einem Arm eines weiteren zweiarmigen Hebels über ein Übersetzungsgetriebe gekoppelt ist. Dieses überträgt Bewegungen des ersten Hebels in einer Richtung in eine Axialverschiebung des zweiten Hebels und eine Bewegung des ersten Hebels in einer dazu senkrechten Richtung in eine Drehbewegung des zweiten Hebels um seine Achse. Der relativ zum ersten Hebel freie Arm des zweiten Hebels trägt ein Schneckengetriebe, welches mit dem Spiegel an einer seiner Schwenkachsen gelenkig verbunden ist. Ein in der anderen Schwenkachse des Spiegels angeordnetes weiteres Gelenk ist ebenfalls mit dem freien Arm des zweiten Hebels verbunden. Dieser Verstellmechanismus ist durch die fünf an den Hebeln vorgesehenen Gelenke sehr aufwendig und daher teuer. Ferner muß bei einer Verstellung des Spiegels nach innen das Bedienungsorgan vom Bediener wegbewegt werden, eine Bewegung, die vom Bediener oft als nach außen gerichtet und damit entgegengesetzt zur Spiegelbewegung empfunden wird.

Mit der Erfindung soll daher ein Außenspiegel geschaffen werden, dessen Spiegel sich vom Inneren des Fahrzeugs aus sich mechanisch leichtgängiger und mit möglichst preiswertem konstruktivem Aufwand verstellen läßt. Diese Aufgabe wird durch den Außenspiegel nach Anspruch 1 gelöst.

Die Erfindung vermeidet den Einsatz aufwendiger Bowdenzüge, gewährleitet eine feinfühlige Verstellung des Spiegels vom Fahrzeuginneren her, und erfordert dennoch geringen konstruktiven Aufwand.

Das Spiegelgehäuse läßt sich leicht an die Fahrzeugkarosserie relativ zum Spiegelfuß anklappen, wenn in Weiterbildung der Erfindung der Hebel in der Klappachse gehalten und mit dem Bedienungsorgan zweckmäßig gelenkig verbunden ist. Dabei erweist es sich als vorteilhaft, in dem den Hebel mit dem Bedienungsorgan verbindenden Gelenk wenigstens eine Raste vorzusehen, welche ein sicheres Halten des Spiegelgehäuses in der Gebrauchslage gewährleistet.

Weitere, zweckmäßige Ausgestaltungen sind in den Unteransprüchen angegeben.

Die Erfindung wird nachstehend anhand des in der beigefügten Zeichnung dargestellten Ausführungsbeispiels im einzelnen beschrieben.
Es zeigen:
- Fig. 1:: eine Ansicht, teilweise im Schnitt, eines auf einem Spiegelfuß befestigten Spiegelgehäuses in Fahrtrichtung, wobei der Spiegel aus dem Spiegelgehäuse entfernt ist;
- Fig. 2:: einen Schnitt durch das Spiegelgehäuse nach Fig. 1 längs der Linie II-II, wobei der Spiegelfuß und das Bedienungsorgan nur schematisch dargestellt und die Befestigung des Spiegelgehäuses auf dem Spiegelfuß weggelassen sind;
- Fig. 3:: eine schematische Draufsicht auf den längs der Linie III-III geschnittenen Außenspiegel nach Fig. 1.
- Fig. 4-6: eine den Figuren 1-3 entsprechende Darstellung einer weiteren Ausführungsform eines Außenspiegels.

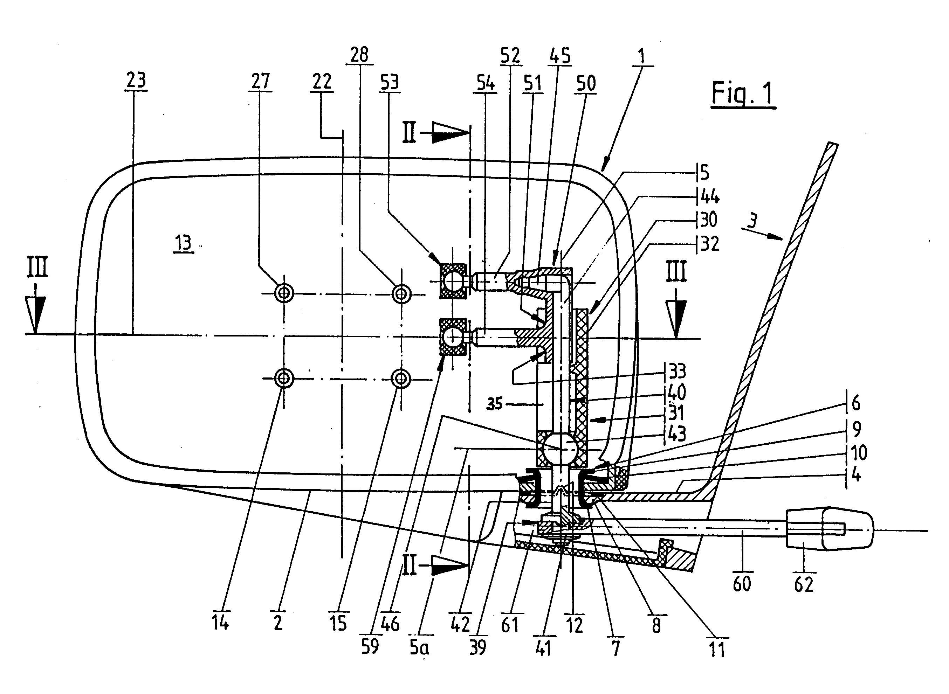

Gemäß Fig. 1 ist ein Spiegelgehäuse 1 von im wesentlich rechtwinkliger Kontur und gerundeten Ecken an seinem spiegelfußnahen unteren Rand 2 auf einem vorstehendem Arm 4 eines Spiegelfußes 3 um eine Achse 5 klappbar befestigt. Dazu umgreift ein Hohlniet 6 mit seinem umgebördelten Rand 7 den verstärkten Rand 8 einer Öffnung im Arm 4 und mit seinem oberen, umgebördelten Rand 9 eine starke Blattfeder 10, welche sich auf der Innenseite des Spiegelgehäuses um dessen mit der Öffnung im Arm 4 fluchtende Öffnung abstützt. Zwischen Spiegelgehäuse 1 und Spiegelfuß 3 ist in eine die genannten Öffnungen umgebende Einsenkung des Armes 4 eine Rastscheibe 11 eingelegt, deren axial erhabene Rastnase 12 in eine entsprechende Vertiefung am Spiegelgehäuse zu dessen sicherem Halten in der in den Figuren dargestellten Gebrauchslage eingreifen kann und andererseits beim Abklappen des Spiegelgehäuses um die Achse 5 relativ zum Spiegelfuß 3 aus der Vertiefung freikommt.

Im mittleren Bereich des Spiegelgehäusebodens 13 ist auf Pfosten 14, 15, 27, 28 eine Platte 16 befestigt, aus welcher sich mittig eine Gelenkkugel 17 erhebt. Auf die Gelenkkugel 17 ist ein Spiegelträger 18, auf dessen Vorderseite das Spiegelglas 19 des Spiegels aufgeklebt ist, mit einem rückwärtigen, mittleren Ansatz 20 aufgeklemmt. Die Klemmung des Ansatzes 20 auf der Gelenkkugel 17 verhindert einerseits, daß sich der Siegelträger 18 mit Spiegel unbeabsichtigt von der Gelenkkugel 17 lösen kann, erlaubt jedoch andererseits ein allseitiges Verschwenken des Spiegels 21, insbesondere um die Achsen 22 und 23, um die Gelenkkugel 17. Die Schwenkachsen 22, 23 liegen senkrecht zueinander und im wesentlichen in der den Spiegel 21 umschließenden Öffnung des Spiegelgehäuses 1.

An den Spiegelgehäuseboden 13 ist in der Nähe und oberhalb des Hohlniets 6 ein langgestreckter Lagerblock 30 angeformt, der auch als separates Bauteil am Spiegelgehäuseboden 13 befestigt sein kann. Der Lagerblock 30 besitzt eine sich über seine gesamte Länge erstreckende Durchgangsöffnung, deren Mittelachse mit der Klappachse 5 zusammenfällt. Im unteren, dem Hohlniet 6 benachbarten Abschnitt 31 ist die Durchgangsöffnung 35 des Lagerblocks 30 zu einem Lager für eine Kugel 43 erweitert. Der obere Abschnitt 32 des Lagerblocks 30 erstreckt sich beiderseits einer zur Schwenkachse 22 senkrechten und die Schwenkachse 23 enthaltenden Ebene und ist durch einen sich in Längsrichtung des Lagerblocks erstreckenden Ausschnitt 33 nach einer vom Spiegelfuß 3 wegweisenden Längsrichtung des Spiegelgehäuses 1 offen. Längs des oberen Abschnitts 32 sind die beiden gegenüberliegenden Innenwände 36, 37 der Durchgangsöffnung 35 derart gebogen, daß sie Mantelabschnitte eines gedachten Zylinders sind, dessen Achse in der Klappachse 5 liegt.

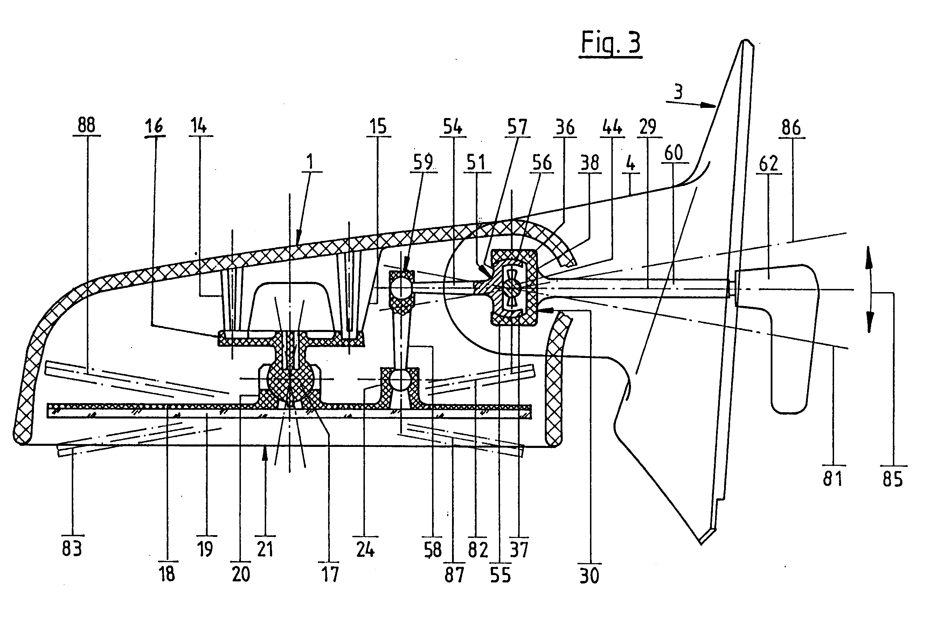

In die Durchgangsöffnung 35 des beispielsweise aus Kunststoff bestehenden Lagerblocks 30 ist ein zweiarmiger Hebel 40 axial so eingesetzt, daß die Kugel 43 des Hebels 40 in dem Lager im unteren Abschnitt 31 verschwenkbar gehalten ist, ein erster Hebelarm 42 sich durch den Hohlniet 6 in das Innere des Armes 4 und ein zweiter Hebelarm 44 sich durch den oberen Abschnitt 32 in der Durchgangsöffnung 35 über das Ende des Lagerblocks 30 hinaus erstrecken. Das freie Ende des zweiten Hebelarms 44 ist zu einem rechtwinklig abstehenden Lagerzapfen 45 ausgebildet, auf welchem ein zweiarmiges Gelenkteil 50 befestigt ist. Der obere Arm 52 des Gelenkteils 50 kann sich wie dargestellt parallel zur Schwenkachse 23 erstrecken und mündet in einem ersten Kugelgelenk 53, welches oberhalb der die Schwenkachse 23 enthaltenden und sich senktecht zur Schwenkachse 22 erstreckenden Ebene liegt. Das Gelenkteil 50 ist in einem unteren Abschnitt zu einem im Querschnitt (Fig. 3) U-förmigen, in dem zylindrischen Abschnitt der Durchgangsöffnung 35 beherbergten Drehteil 51 ausgebildet, dessen gegenüberliegende Schenkel 55, 56 an ihren an der Innenwand der Durchgangsöffnung 35 liegenden Außenflächen kugelkalottenförmig gestaltet sind. Der die Schenkel 55, 56 verbindende ebene Abschnitt 57 des Drehteils 51 umschließt zusammen mit den Schenkeln 55, 56 und der längs des oberen Abschnitts 32 ebenen Rückwand 38 des Lagerblocks 30 den zweiten Hebelarm 44 derart, daß der zweite Hebelarm 44 senkrecht zur Schwenkachse 23 beweglich bleibt. Von der Vorderfläche der Scheibe 57 steht der untere Arm 54 aus dem Lagerblock 30 durch den Längsschlitz 33 in einer zur Schwenkachse 23 parallelen Richtung vor, welche in der die Schwenkachse 23 enthaltenden und zur Schwenkachse 22 senkrechten Ebene liegt. Am freien Ende des unteren Arms 54 ist eine zweites Kugelgelenk 59 ausgebildet.

Das zweite Kugelgelenk 59 ist über ein Verbindungsstück 58 an einen rückwärtigen, unteren, in der letztgenannten Ebene liegenden Ansatz 24 des Spiegelglasträgers 18 angelenkt. Ein oberes Verbindungsstück 26 verbindet das erste Kugelgelenk 53 mit einem oberhalb der Ebene liegenden, rückwärtigen Ansatz 25 des Spiegelglasträgers gelenkig.

Der erste Hebelarm 42 ist an seinem im Arm 4 beherbergten Ende mit einem quer abstehenden, und sich durch den Arm 4 und den Fuß 3 erstreckenden stangenförmigen Organ 60 verbunden, auf dessen freiem, aus dem Spiegelfuß 3 (in das Fahrzeuginnere) vorstehenden Ende ein Hebel 62 als Handgriff befestigt ist. Wenn sichergestellt ist, daß das Organ 60 einen für das Abklappen des Spiegelgehäuses 1 erforderlichen Ausweichweg zur Verfügung hat, kann die Stange 60 starr mit dem ersten Hebelarm 42 verbunden sein. Da ein derartiger Ausweichraum für die Stange 60 häufig nicht zur Verfügung steht, wird die Stange 60 zweckmäßig um die Klappachse drehbar am ersten Hebelarm 42 verbunden. Dazu weist die Stange 60 an ihrem dem Bedienungsgriff 62 gegenüberliegenden Ende ein Auge auf, durch welches sich das untere Ende des ersten Hebelarms 42 erstrecken kann. Die das Auge umschließende Scheibe 61 der Stange 60 liegt durch ein auf dem Ende des ersten Hebelarms 42 gehaltenes Federelement 41 unter Federdruck gegen eine scheibenförmige Erweiterung des ersten Hebelarms 42 formschlüssig an. Dabei ist beispielsweise in der Scheibe 61 eine axial Nut ausgebildet, in welche eine aus der Verbreiterung 39 axial vorstehende Erhebung zur rastenden Verbindung zwischen Stange 60 und erstem Hebelarm 42 eingreifen kann.

Beim Abklappen des Spiegelgehäuses 1 kann dann der Hebel 40 relativ zur Stange 60 entsprechend um die Klappachse 5 verdrehen.

Zum Verstellen des Spiegels 21 nach oben um die bei Einbau des Außenspiegels dann im wesentlichen horizontal liegende Schwenkachse 23 wird der Bedienungsgriff 62 entsprechend dem Doppelpfeil 75 leicht nach oben gedrückt, so daß der Hebel 40 um die zur Schwenkachse 23 parallele Mittelachse 5a der Kugel 43 aus der Ebene der Figur 1 herausgedreht wird, wobei der erste Hebelarm 42 aus der Ebene der Figur 1 nach vorne und der zweite Hebelarm 44 aus der Ebene der Figur 1 nach hinten drehen. Dieser Drehung des zweiten Hebelarms 44 folgt der obere Arm 52 mit erstem Gelenk 53. Der Auslenkung des zweiten Hebelarms 44 (bei Betrachtung der Figur 3 nach oben) kann das Drehteil 51 nur durch Verdrehen innerhalb des zylindrischen Abschnitts 36, 37 der Durchgangsöffnung 35 im oberen Abschnitt 32 folgen. Da diese Drehung um eine zur Schwenkachse 23 parallele Achse 29 erfolgt, erfährt das zweite Kugelgelenk 59 hierbei keine Lagerveränderung, so daß der Spiegel 21 wunschgemäß nach oben um die Schwenkachse 23 verstellt wird. Die Linien 71, 72, 73 deuten diese Verstellung an.

Eine Verstellung des Spiegels 21 um die Schwenkachse 23 nach unten wird entsprechend erreicht, wenn der Bedienungsgriff 62 nach unten gedrückt wird und der Hebel 40 demzufolge eine gegensinnige Drehung um den Mittelpunkt 46 ausführt. Die Linien 76, 77, 78 deuten diese Verstellung an.

Zum Verstellen des Spiegels 21 nach innen um die Schwenkachse 22 wird der Bedienungsgriff 62 entsprechend dem Doppelpfeil 85 aus der Ebene der Figur 1 nach vorne (gemäß Fig. 3 nach unten) bewegt, so daß der Hebel 40 um die Klappachse 5 dreht. Dieser Drehbewegung können sowohl der obere Arm 52 wie auch der untere Arm 54 gleichsinnig folgen, so daß eine Schwenkbewegung der beiden gleich langen Arme 52, 54 bei Betrachtung der Figur 1 nach hinten (bezw. gemäß Fig. 3 nach oben) zu einer Schwenkbewegung des Spiegels 21 um die Achse 22 führt. Wenn die Arme 52, 54 bezüglich der Klappachse 5 nicht gleich lang sind, wird dennoch eine Verschwenkung des Spiegels 21 um die Achse 22 nach innen erreicht, wenn der untere Ansatz 24 und der obere Ansatz 26 des Spiegelträgers 18 an Stellen ausgebildet sind, daß die Verbindungslinie ihrer Gelenkpunkte parallel zur Schwenkachse 22 liegt. Die Linien 81, 82, 83 verdeutlichen diese Schwenkbewegung. Entsprechend zeigen die Linien 86, 87, 88 eine Verschwenkung des Spiegels 21 nach außen. Man sieht aus Figur 3 im übrigen, daß sich die Schwenkachsen 22 und 23 im Mittelpunkt der Gelenkkugel 17 kreuzen.

Es liegt im Rahmen der Erfindung, die Gelenkkugel 43 in die Höhe des Drehteils 51 zu verlegen, so daß die Ausbildung eines gegenüber dem Hebel 40 besonderen Gelenkteils 50 entfallen kann. Ferner können die vorstehend erläuterten Kugelgelenke auch durch Kardangelenke ersetzt sein.

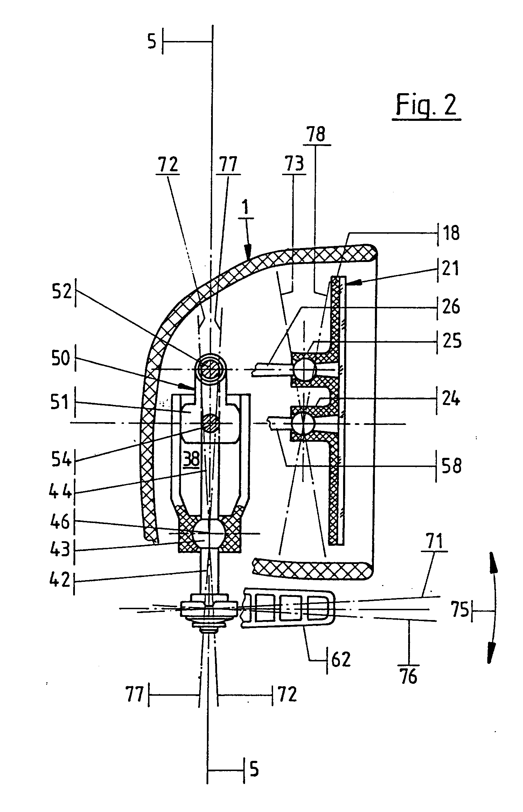

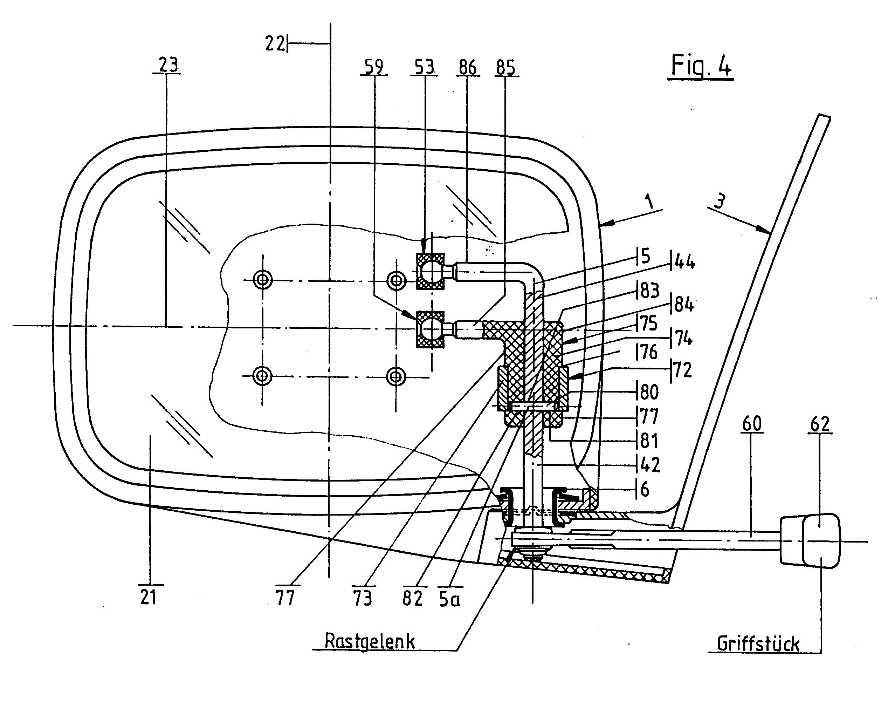

Bei der in den Figuren 4-6 dargestellten Ausführungsform der Erfindung ist die Verstellbarkeit des oberen Arms 52 und des unteren Arms 54 um die Schwenkachsen 22, 23 durch eine vereinfachte Ausführung des Gelenkteils 50 sowie der Kugel 43 realisiert. Die mit den Teilen aus Figuren 1-3 übereinstimmenden Teile sind in den Figuren 4-6 mit gleichen Bezugszeichen versehen.

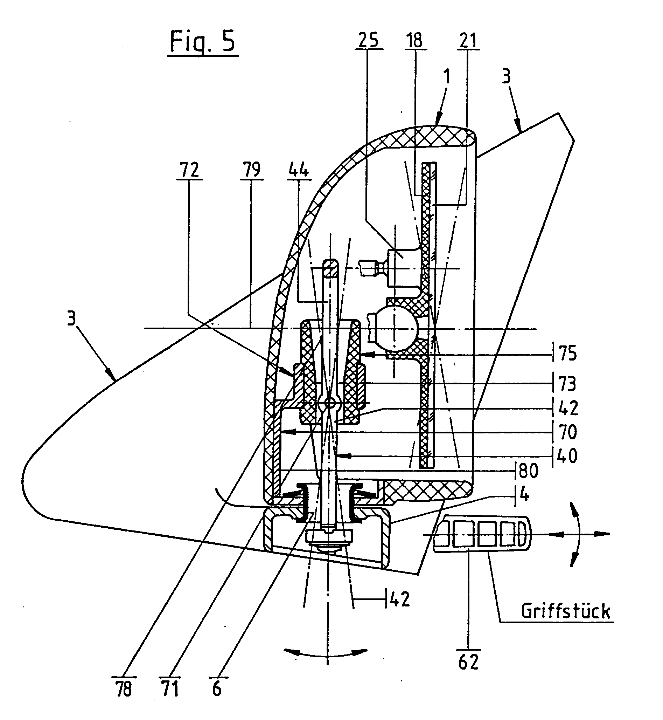

An einem Halter 70, der mit einem Flansch 71 an der Innenfläche des Spiegelgehäuses 1 oberhalb des Rohrniets 6 befestigt ist, ist ein zylindrisches Lager 72 ausgebildet, dessen Achse in der Klappachse 5 liegt. In einem vorderen Abschnitt ist die Zylinderwand 73 über einen Teil ihres Umfangs ausgeschnitten, so daß durch den Ausschnitt ein Drehteil 75 mit seinem zylindrischen Schaft 74 in das zylindrische Lager 72 einrastend eingedrückt werden kann. Das Drehteil 75 weist oberhalb und unterhalb der Enden der Zylinderwand 73 radial nach auswärts vorspringende Schultern 76, 77 auf, so daß das Drehteil 75 im Lager 72 um die Klappachse 5 drehbar gehalten ist. Das Drehteil 75 besitzt eine axiale Durchgangsöffnung, deren unterer, dem Rohrniet 6 benachbarter Abschnitt 78 in der Ebene der Figur 5 eine größere lichte Weite hat als die Breite des Hebels 40, und deren oberer Abschnitt 79 sich nach oben konisch erweitert.

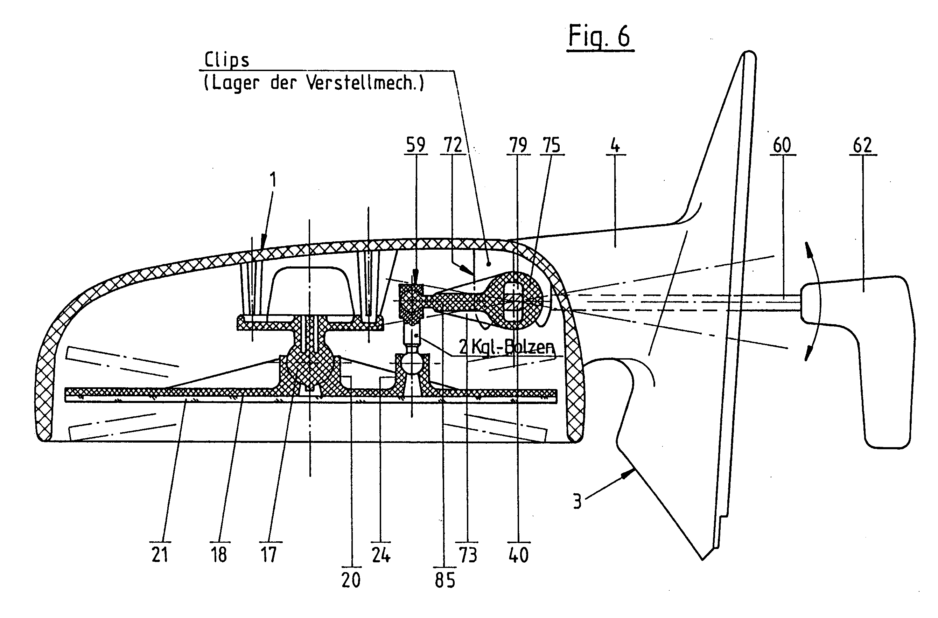

Wie Figur 6 erkennen läßt, ist der Querschnitt der beiden Öffnungsabschnitte 78, 79 rechtwinklig und dem wenigstens über die Länge der Öffnung 78, 79 rechtwinkligen Querschnitt des Hebels derart angepaßt, daß der Hebel 40 in der Öffnung 78, 79 unverdrehbar, jedoch in der Ebene der Figur 5 beweglich ist. Diese Beweglichkeit des Hebels 40 in der Öffnung 78, 79 wird durch einen Lagerzapfen 80 erreicht, der gemäß Fig. 4 in zwei fluchtenden Radialbohrungen 81, 82 des Drehteils 75, welche in die Seitenwände des unteren Abschnitts 78 eingebracht sind, gehalten ist und sich durch eine Mittelbohrung 83 des Hebels 40 erstreckt. Der in den Radialbohrungen 81, 82 und/-oder in der Mittelbohrung 83 drehbare Lagerzapfen ist so ausgerichtet, daß sich seine Längsachse 5a parallel zur Schwenkachse 23 erstreckt.

Dem das Lager 72 nach oben überragenden Abschnitt 84 des Drehteils 75 ist ein unterer Arm 85 angeformt, dessen Funktion und geometrische Lage bezüglich der Schwenkachsen 22, 23 dem unteren Arm 54 entspricht. Der untere Arm 85 ist daher um die Klappachse 5 im Lager 72 verschwenkbar, wobei diese Schwenkung durch eine entsprechende Drehung am Griffteil 62 aufgrund des Formenschlusses des Drehteils 75 mit dem Hebel 40 erzeugt wird.

Am oberen, freien Ende des zweiten Hebelarms 44 ist wie bei der vorstehend beschriebenen Ausführungsform der Erfindung der dem Arm 52 entsprechende obere Arm 86 ausgebildet, der bei diesem Ausführungsbeispiel der Erfindung durch ein rechtwinkliges Abbiegen des Endabschnittes des zweiten Hebelarms 44 geschehen ist, welcher sich über das obere Ende des Drehteils 74 erhebt.

Die Befestigung des oberen Arms 86 am zweiten Hebelarm 44 sowie des unteren Arms 85 an dem Spiegelträger 18 ist in gleicher Weise ausgeführt wie in dem vorstehend beschriebenen Ausführungbeispiel. Auch die Befestigung der Stange 60 am ersten Hebelarm 42 sowie die Befestigung des Spiegelgehäuses 1 am Spiegelfuß 3 sind wie vorstehend beschrieben ausgeführt.

## Patentansprüche

1. Außenspiegel für ein Fahrzeug mit einem Spiegelgehäuse (1), an welchem ein Spiegel um zwei Achsen schwenkbar gehalten ist und das relativ zu einem Spiegelfuß (3) klappbar ist, wobei der Spiegel (21) über einen Verstellmechanismus mit einem sich durch den Spiegelfuß (3) erstreckenden Bedienungsorgan gekoppelt ist, das Bedienungsorgan (60, 62) mit dem ersten Hebelarm (42) eines zweiarmigen, am Spiegelgehäuse (1) befestigten, um zu den Schwenkachsen (22, 23) des Spiegels (21) parallele Achsen (5, 5a) drehbaren Hebels (40) verbunden ist und der Spiegel mit dem zweiten Hebelarm (44) des Hebels (40) über ein erstes Gelenk (53) und ein zweites Gelenk (59) gekoppelt ist, von denen das zweite Gelenk (59) in einer eine (23) der beiden Schwenkachsen (22, 23) enthaltenden, zur anderen Schwenkachse senkrechten Ebene liegt und das erste Gelenk (53) außerhalb der anderen Schwenkachse (22) liegt.

2. Außenspiegel nach Anspruch 1, dadurch gekennzeichnet, daß der Hebel (40) um einen Schwenkpunkt (46) drehbar ist, welcher in der Ebene liegt.

3. Außenspiegel nach Anspruch 1 oder 2, dadurch gekennzeichnet, daß die zur Ebene senkrechte Drehachse des Hebels (40) mit der Klappachse (5) des Spiegelgehäuses zusammenfällt.

4. Außenspiegel nach einem der vorstehenden Ansprüche, dadurch gekennzeichnet, daß das Bedienungsorgan (60, 62) mit dem ersten Hebelarm (42) um eine der Drehachsen (5) des Hebels (40) schwenkbar verbunden ist.

5. Außenspiegel nach Anspruch 4, dadurch gekennzeichnet, daß zwischen dem Bedienungsorgan (60, 62) und dem ersten Hebelarm (42) eine in einer vorgegebenen Stellung einrastende Kupplung (39, 61) vorgesehen ist.

6. Außenspiegel nach einem der vorstehenden Ansprüche, dadurch gekennzeichnet, daß der Kreuzungspunkt (46) der Drehachsen (5, 5a) des Hebels (40) unterhalb der Ebene, vorzugsweise in der Nähe eines das Spiegelgehäuse (1) an einem Arm (4) des Spiegelfußes (3) haltenden Rohrniets (6) liegt.

7. Außenspiegel nach Anspruch 6, dadurch gekennzeichnet, daß am zweiten Hebelarm (44) ein relativ zum Spiegelgehäuse (1) parallel zu den beiden Schwenkachsen (22, 23) drehbares Gelenkteil (50) vorgesehen ist, an welchem das erste und das zweite Kugelgelenk (53, 59) ausgebildet sind.

8. Außenspiegel nach einem der vorstehenden Ansprüche, dadurch gekennzeichnet, daß der Hebel (40) in einem am Spiegelgehäuse (1) befestigten, langgestreckten Lagerblock (30) gehalten ist, welcher ein Lager für eine Gelenkkugel (43) des Hebels sowie axial oberhalb der Gelenkkugel (43) ein weiteres Lager (36, 37) für das Gelenkteil (50) aufweist.

9. Außenspiegel nach einem der vorstehenden Ansprüche, dadurch gekennzeichnet, daß die Verbindungslinie der beiden Gelenke (53, 59) sich parallel zur anderen Schwenkachse (22) erstreckt.

10. Außenspiegel nach einem der vorstehenden Ansprüche, dadurch gekennzeichnet, daß der Hebel (40) von einem Drehteil (75) in einer zu einer der beiden Schwenkachsen (22, 23) parallelen Richtung drehfest und in einer dazu senkrechten Richtung schwenkbar gehalten ist.

11. Außenspiegel nach Anspruch 10 dadurch gekennzeichnet, daß das Drehteil (75) in einem am SPiegelgehäuse (1) befestigten Lager (72) drehbar gehalten ist.

12. Außenspiegel nach Anspruch 11, dadurch gekennzeichnet, daß das Lager (72) ein Zylinderlager ist, dessen Achse in der Klappachse (5) liegt.

13. Außenspiegel nach einem der Ansprüche 10-12, dadurch gekennzeichnet, daß eines der beiden Kugelgelenke (53, 25) an einem aus dem Drehteil (75) vorstehenden Ende (86) des zweiten Hebelarms (44) und das andere Kugelgelenk (59, 24) an einem Arm (54; 85) des Drehteils (50; 75) ausgebildet sind.

## Claims

1. An external mirror for a vehicle with a mirror housing (1), on which a mirror is held so as to swivel about two axes and which can be tilted relative to a mirror support (3), wherein the mirror (21) is coupled via an adjusting mechanism to a control element, which extends through the mirror support (3), the control element (60,62) is connected to the first lever arm (42) of a two-armed lever (40), which is fastened to the mirror housing (1) and is rotatable about axes (5,5a) lying parallel to the swivelling axes (22,23) of the mirror (21), and the mirror is coupled to the second lever arm (44) of the lever (40) via a first joint (53) and a second joint (59), the second joint (59) lying in a plane perpendicular to the other swivelling axis and containing one (23) of the two swivelling axes (22,23), and the first joint (53) lying outside the other swivelling axis (22).

2. An external mirror according to Claim 1, characterised in that the lever (40) is rotatable about a swivelling point (46) which lies in the plane.

3. An external mirror according to Claim 1 or 2, characterised in that the rotational axis of the lever (40), which is perpendicular to the plane, coincides with the tilting axis (5) of the mirror housing.

4. An external mirror according to any one of the preceding claims, characterised in that the control element (60, 62) is connected to the first lever arm (42) so as to swivel about one of the rotational axes (5) of the lever (40).

5. An external mirror according to Claim 4, characterised in that a coupling (39,61), which engages in a given position, is provided between the control member (60,62) and the first lever arm (42).

6. An external mirror according to any one of the preceding claims, characterised in that the point of intersection (46) of the rotational axes (5,5a) of the lever (40) lies beneath the plane, preferably in the vicinity of a tubular rivet (6), which holds the mirror housing (1) on one arm (4) of the mirror support (3).

7. An external mirror according to Claim 6, characterised in that a joint part (50) is provided on the second lever arm (44), this joint part (50) being rotatable relative to the mirror housing (1) in a parallel manner to the two swivelling axes (22,23), and the first and the second ball joint (53,59) being formed on this joint part (50).

8. An external mirror according to any one of the preceding claims, characterised in that the lever (40) is held in an elongated bearing block (30) which is fastened to the mirror housing (1) and which has a bearing for a ball (43) of the lever joint and, axially above the ball (43) of the joint, a further bearing (36,37) for the joint part (50).

9. An external mirror according to any one of the preceding claims, characterised in that the connecting line of the two joints (53,59) extends parallel to the other swivelling axis (22).

10. An external mirror according to any one of the preceding claims, characterised in that the lever (40) is held by a rotating part (75) so as to be rotationally fast in a direction parallel to one of the two swivelling axes (22,23) and so as to swivel in a direction perpendicular thereto.

11. An external mirror according to Claim 10, characterised in that the rotating part (75) is held rotatably in a bearing (72) fastened to the mirror housing (1).

12. An external mirror according to Claim 11, characterised in that the bearing (72) is a cylindrical bearing, whose axis lies in the tilting axis (5).

13. An external mirror according to any one of Claims 10-12, characterised in that one of the two ball joints (53,25) is formed on an end (86) of the second lever arm (44) projecting out of the rotating part (75) and the other ball joint (59,24) is formed on an arm (54;85) of the rotating part (50;75).

## Revendications

1. Rétroviseur extérieur de véhicule avec un boîtier de rétroviseur (1) sur lequel un miroir est maintenu pivotant autour de deux axes et qui est rabattable par rapport à un pied de rétroviseur (3), le miroir (21) étant couplé par l'intermédiaire d'un mécanisme de réglage à un organe de manipulation s'étendant à travers le pied de rétroviseur (3), l'organe de manipulation (60, 62) étant relié au premier bras de levier (42) d'un levier rotatif (40) à deux bras, fixé sur le boîtier de rétroviseur (1), autour d'axes (5, 5a) parallèles aux axes de pivotement (22, 23) du miroir (21) et le miroir étant couplé au deuxième bras de levier (44) du levier (40) par l'intermédiaire d'une première articulation (53) et d'une deuxième articulation (59), la deuxième articulation (59) étant située dans un plan comprenant l'un (23) des deux axes de pivotement (22, 23), perpendiculaire par rapport à l'autre axe de pivotement et la première articulation (53) étant située à l'extérieur de l'autre axe de pivotement (22).

2. Rétroviseur extérieur selon la revendication 1, caractérisé en ce que le levier (40) est pivotant autour d'un point de pivotement (46) qui est situé dans le plan.

3. Rétroviseur extérieur selon la revendication 1 ou 2, caractérisé en ce que l'axe de rotation du levier (40) perpendiculaire par rapport au plan coïncide avec l'axe de rabattement (5) du boîtier de rétroviseur.

4. Rétroviseur extérieur selon l'une des revendications précédentes, caractérisé en ce que l'organe de manipulation (60, 62) est relié pivotant au premier bras de levier (42) autour de l'un des axes de rotation (5) du levier (40).

5. Rétroviseur extérieur selon la revendication 4, caractérisé en ce qu'entre l'organe de manipulation (60, 62) et le premier bras de levier (42) il est prévu un accouplement (39, 61) s'enclenchant dans une position prédéterminée.

6. Rétroviseur extérieur selon l'une des revendications précédentes, caractérisé en ce que le point d'intersection (46) des axes de rotation (5, 5a) du levier (40) est situé au-dessous du plan, de préférence à proximité d'un rivet creux (6) maintenant le boîtier de rétroviseur (1) sur un bras (4) du pied de rétroviseur (3).

7. Rétroviseur extérieur selon la revendication 6, caractérisé en ce qu'il est prévu sur le deuxième bras de levier (44) une partie d'articulation (50) rotative par rapport au boîtier de rétroviseur (1) parallèlement aux deux axes de pivotement (22, 23), sur laquelle sont formées la première et la deuxième articulation sphérique (53, 59).

8. Rétroviseur extérieur selon l'une des revendications précédentes, caractérisé en ce que le levier (40) est maintenu dans un support d'appui oblong (30) fixé au boîtier de rétroviseur (1), qui présente un appui pour une rotule d'articulation (43) du levier et axialement au-dessus de la rotule d'articulation (43) un deuxième appui (36, 37) pour la partie d'articulation (50).

9. Rétroviseur extérieur selon l'une des revendications précédentes, caractérisé en ce que la ligne de liaison des deux articulations (53, 59) s'étend parallèlement à l'autre axe de pivotement (22).

10. Rétroviseur extérieur selon l'une des revendications précédentes, caractérisé en ce que le levier (40) est maintenu par une pièce rotative (75) stationnaire en rotation dans une direction parallèle à un des deux axes de pivotement (22, 23) et pivotant dans une direction perpendiculaire à celui-ci.

11. Rétroviseur extérieur selon la revendication 10, caractérisé en ce que la pièce rotative (75) est maintenue rotative dans un appui (72) fixé au boîtier de rétroviseur (1).

12. Rétroviseur extérieur selon la revendication 11, caractérisé en ce que l'appui (72) est un appui cylindrique dont l'axe est situé dans l'axe de rabattement (5).

13. Rétroviseur extérieur selon l'une des revendications 10 à 12, caractérisé en ce que l'une des deux articulations sphériques (53, 25) est formée sur une extrémité (86) dépassant de la pièce rotative (75) du deuxième bras de levier (44) et l'autre articulation sphérique (59, 24) sur un bras (54 ; 85) de la pièce rotative (50 ; 75).
